(19) Europäisches Patentamt
European Patent Office
Office européen des brevets

(11) EP 0 584 629 B1

(12) # EUROPÄISCHE PATENTSCHRIFT

(45) Veröffentlichungstag und Bekanntmachung des Hinweises auf die Patenterteilung:
**23.10.1996 Patentblatt 1996/43**

(51) Int Cl.[6]: **C08F 8/00**, C08C 19/44

(21) Anmeldenummer: **93112776.5**

(22) Anmeldetag: **10.08.1993**

(54) **Polymerisate auf Basis von konjugierten dienen**

Polymers based on conjugated dienes

Polymères à base de diènes conjugés

(84) Benannte Vertragsstaaten:
**BE CH DE DK ES FR GB IT LI NL SE**

(30) Priorität: **25.08.1992 DE 4228160**

(43) Veröffentlichungstag der Anmeldung:
**02.03.1994 Patentblatt 1994/09**

(73) Patentinhaber: **BASF Aktiengesellschaft**
**67063 Ludwigshafen (DE)**

(72) Erfinder:
- **Bender, Dietmar, Dr.**
**D-6707 Schifferstadt (DE)**
- **Bronster, Klaus, Dr.**
**D-6719 Carlsberg (DE)**
- **Mach, Helmut, Dr.**
**D-6900 Heidelberg (DE)**
- **Fischer, Martin, Dr.**
**D-6700 Ludwigshaven (DE)**

(56) Entgegenhaltungen:
**EP-A- 0 001 547** **EP-A- 0 211 395**
**EP-A- 0 422 728** **EP-A- 0 450 694**
**US-A- 4 039 593** **US-A- 4 156 061**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 584 629 B1

## Beschreibung

Die vorliegende Erfindung betrifft neue, funktionelle Gruppen tragende Polymerisate Ia und Ib auf der Basis von konjugierten Dienen, erhältlich durch

A)

1. partielle oder vollständige Hydrierung der olefinischen Doppelbindungen eines Polymerisates IIa aus

a) 20 bis 100 Gew.-% eines konjugierten Diens,

b) 0 bis 80 Gew.-% eines Vinylaromaten und

c) 0 bis 20 Gew.-% weiterer Comonomerer

zu den hydrierten Polymerisaten IIb,

2. Metallierung der Polymerisate IIb mit einer alkalimetallorganischen Verbindung bis zu einem Metallierungsgrad von 0,01 bis 12 mmol des Alkalimetalls pro Gramm IIb zu den metallierten Polymerisaten IIc,

3. Umsetzung der Polymerisate IIc mit einem Diaziridin III, das bis zu 20 C-Atome enthält, zu den Polymerisaten IId und

4. Hydrolyse oder Alkoholyse von IId zu Ia

oder durch

B)

1. partielle Hydrierung eines Polymerisates IIa zu partiell hydrierten Polymerisaten IIb' mit der Maßgabe, daß IIb' noch 0,2 bis 2 mmol olefinische Doppelbindungen pro Gramm Polymerisat enthält,

2. Epoxidierung der Doppelbindungen von IIb' zu epoxidierten Polymerisaten IIe mit der Maßgabe, daß IIe 0,01 bis 2 mmol Oxiranringe pro Gramm Polymerisat enthält und

3.Umsetzung der Polymerisate IIe mit Ammoniak, einem primären Amin mit bis zu 12 C-Atomen, einem sekundären Amin mit bis zu 20 C-Atomen, einem Polyamin mit bis zu 300 C-Atomen und bis zu 100 N-Atomen, einem Alkanolamin mit bis zu 120 C-Atomen, bis zu 10 N-Atomen und bis zu 12 Hydroxygruppen, einem Polyalkohol mit bis zu 300 C-Atomen und bis zu 150 Hydroxygruppen oder einem Polyether mit bis zu 300 C-Atomen und bis zu 100 Sauerstoffatomen (Verbindung IV) zu Ib.

Außerdem betrifft die Erfindung ein Verfahren zur Herstellung dieser Polymerisate, deren Verwendung als Viskositätsindex-Verbesserer für Motorenöle sowie die Motorenöle selber.

Die Polymerisation von Dienen und gegebenenfalls Vinylaromaten sowie weiterer Comonomerer ist in zahlreichen Ausgestaltungen allgemein bekannt. Neben der radikalischen Polymerisation ist die anionische Polymerisation eine übliche Darstellungsmethode. Derartige Polymerisate werden nach der Hydrierung ihrer olefinischen Doppelbindungen als Viskositätsindex-Verbesserer in Schmierstoffen verwendet.

Darüber hinaus lassen sich funktionelle Gruppen wie Hydroxy- und Aminogruppen durch polymeranaloge Umsetzungen in diese Basispolymeren einfügen, so daß die ursprünglich öllöslichen Polymerisate in ihren Eigenschaften verändert werden. Aufgrund der zusätzlichen polaren Gruppen wirken sie auch als Dispergiermittel.

Da Öllöslichkeit und Dispergierwirkung von der Art und Anzahl der polaren Gruppen abhängen, ist man allgemein bestrebt, Polymerisate herzustellen, die beide Eigenschaften in einem ausgewogenen Verhältnis aufweisen.

Aus der US-A 4 145 298 ist die polymeranaloge Umsetzung von hydrierten und metallierten Butadien-Styrol-Copolymerisaten mit Ketonen, Aldehyden, Nitrilen und Epoxiden bekannt, welche Dialkylaminogruppen als Substituenten tragen. Die dispergierende Wirkung dieser Polymerisate ist jedoch nicht befriedigend.

Ferner ist aus der EP-A 329 254 die polymeranaloge Umsetzung von hydrierten und metallierten Butadien-Styrol-Copolymerisaten mit Isocyanaten und Iminen bekannt.

Nach der Lehre der EP-A 211 395 setzt man metallierte Butadien-Styrol-Copolymerisate mit Diaziridinen um. Die

so erhaltenen Produkte sind gut als Viskositätsindex-Verbesserer für Motorenöle geeignet, lassen aber hinsichtlich ihrer Stabilität im Dauerbetrieb noch zu wünschen übrig. Ähnlich verhält es sich mit den Copolymerisaten gemäß der DE-A 36 11 421, bei denen es sich um die Umsetzungsprodukte aus metallierten Butadien-Styrol-Copolymerisaten mit Schiffschen Basen handelt.

Der Erfindung lagen neue, funktionelle Gruppen tragende Polymerisate auf der Basis von konjugierten Dienen mit hoher Dispergierwirkung bei gleichzeitig vorhandener guter Öllöslichkeit sowie Oxidations- und Thermostabilität als Aufgabe zugrunde.

Demgemäß wurden die eingangs definierten Polymerisate Ia und Ib gefunden.

Weiterhin wurden ein Verfahren zu deren Herstellung, deren Verwendung als Viskositätsindex-Verbesserer für Motorenöle sowie die Motorenöle selbst gefunden.

Polymerisation

Die erfindungsgemäßen Polymerisate Ia und Ib bestehen zu 20 bis 100 Gew.-%, vorzugsweise 40 bis 100 Gew.-%, aus einem konjugierten Dien (a).

Daneben können sie auch noch aus bis zu

80 Gew.-%, vorzugsweise 20 bis 60 Gew.-%, eines Vinylaromaten (b) und aus bis zu

20 Gew.-% weiteren Comonomeren (c) aufgebaut sein.

Die aus konjugierten Dienen aufgebauten Basispolymerisate enthalten insbesondere $C_4$- bis $C_{20}$-Diene. Beispielsweise eignen sich als Monomere (a)

Buta-1,3-dien
2-Methylbuta-1,3-dien (Isopren)
2-Phenylbuta-1,3-dien
2,3-Dimethylbuta-1,3-dien
Penta-1,3-dien
Hexa-1,3-dien
4-Ethylhexa-1,3-dien
3-Butylocta-1,3-dien und deren Gemische.

Bevorzugte Monomere sind Buta-1,3-dien, Isopren und 2,3-Dimethylbuta-1,3-dien.

Als Monomere (b) eignen sich

Styrol
α-Methylstyrol
p-Methylstyrol
o- und m-Methylstyrol
p-tert.-Butylstyrol
o,p-Dimethylstyrol
Vinylnaphthaline und deren Gemische

wobei Styrol, α-Methylstyrol und p-Methylstyrol besonders bevorzugt sind. Es sind auch Styrol- und Naphthalinderivate möglich, die mit höheren Alkylresten substituiert sind.

Als weitere Monomere (c) kommen folgende Verbindungen in Betracht:

Ethylen
$C_3$- bis $C_{20}$-α-Olefine
nicht konjugierte Diolefine mit $C_5$ bis 20-C-Atomen
Vinylester wie Vinylacetat
Vinylether wie Methylvinylether und Isobutylvinylether
Methyl- und Ethylvinylketon
Vinylpyridine
Vinylpyrrolidone
Alkylester, Aminoalkylester, Amide- und Aminoalkylamide der Acryl- und Methacrylsäure
sonstige Monomere, die mit Alkalimetallen nicht nennenswert reagieren, sowie Gemische der vorgenannten Monomeren.

Soweit es sich bei den Basispolymerisaten IIa um Copolymerisate handelt, kommen sowohl statistische Polymerisate als auch Blockcopolymerisate sowie Mischformen beider Arten in Betracht.

Die Struktur der Basispolymerisate hat auf die Eigenschaften der erfindungsgemäßen polymeren Produkte Einfluß. Statistische Copolymerisate zeichnen sich durch eine hohe Scherstabilität aus, jedoch erhöhen sie nur in geringem Maße die Viskosität des Motoröls. Diese viskositätserhöhende Wirkung wird auch als Aufdickungswirkung bezeichnet. Blockcopolymerisate mit vergleichbarem Molekulargewicht zeigen dagegen eine höhere Aufdickungswirkung bei gleichzeitig geringerer Scherstabilität.

Auch Polymerisate mit sternförmiger Struktur, welche extrem scherstabil sind, kommen in Betracht.

Als Basispolymerisate besonders bevorzugte Copolymerisate mit dem Aufbau A-B, wobei A für Dien und B für einen Vinylaromaten steht, sind statistisch aufgebaute Butadien-Styrol-Copolymerisate, Butadien-Styrol-Zweiblockcopolymerisate und Isopren-Styrol-Zweiblockcopolymerisate.

Die Basispolymerisate weisen im allgemeinen ein mittleres Molekulargewicht (Zahlenmittel $\overline{M}_n$) zwischen 10 000 und 1000 000, vorzugsweise zwischen 50 000 und 600 000 auf.

Die Herstellung der Polymerisate IIa kann nach allen bekannten Polymerisationsmethoden erfolgen (s. z. B. W.R. Sorensen und T.W. Campbell, "Präparative Methoden der Polymerchemie", Verlag Chemie, 1961)

Bevorzugt ist die anionische Polymerisation unter Bildung von "lebenden Polymeren" (J. Appl. Polym. Sci. 1978, 22, 2007), da hiernach Polymerisate mit einer engen Molmassenverteilung erhalten werden.

Die anionische Polymerisation wird z.B. unter Verwendung von alkalimetallorganischen Initiatoren durchgeführt, wobei Lithiumalkylverbindungen wie sek.-Butyllithium und Amyllithium besonders geeignet sind. Der Initiator wird in einer Menge von 0,05 bis 10, vorzugsweise 0,1 bis 2 mmol/mol Monomer verwendet. Nach der Menge des Initiators richtet sich die Kettenlänge des Polymerisates nach bekannten Gesetzmäßigkeiten aus, so daß sich bei niedriger Initiatorkonzentration Polymerisate mit einem hohen Molekulargewicht und bei hoher Initiatorkonzentration Polymerisate mit einem geringen Molekulargewicht bilden.

Die Polymerisation wird bei einer Temperatur von (-100) bis 200°C, vorzugsweise von (-20) bis 150°C durchgeführt und erfolgt im allgemeinen in Lösung. Als Lösungsmittel kommen inerte Flüssigkeiten in Betracht, wie aliphatische, cycloaliphatische und aromatische Kohlenwasserstoffe. Geeignete Lösungsmittel sind beispielsweise Hexan, Cyclohexan, Methylcyclohexan, Benzol und Toluol sowie Mischungen hiervon.

Ferner können zweckmäßigerweise vinylische Monomeren, die selbst keine Homopolymerisation eingehen, wie 1,1-Diphenylethylen in geringer Menge mit dem Lösungsmittel vorgelegt werden, die - wie allgemein bekannt - störende Verunreinigungen durch Copolymerisation aus der Reaktionsmischung beseitigen, was durch einen Farbumschlag angezeigt wird.

Im Falle der anionischen Polymerisation wird die Polymerisation in bekannter Weise abgebrochen, z.B. durch Zugabe von Wasser und Alkanol wie Ethanol.

Hydrierung

Die Hydrierung der Polymerisate IIa erfolgt vorzugsweise katalytisch mit Wasserstoff. Im Falle der partiellen Hydrierung zu den Polymerisaten IIb' wird die Hydrierung so ausgeführt, daß pro Gramm Polymerisat nicht mehr als 2 mmol olefinische Doppelbindungen vorhanden sind.

Die Hydrierung der olefinischen Doppelbindungen erfolgt nach allgemein bekannten Methoden.

Als Hydrierkatalysatoren kommen vorzugsweise Mischkatalysatoren aus Aluminiumtrialkylen und Nickel-, Kobalt- sowie Eisencarboxylaten und -Alkoholaten in Betracht. Typische Mischkatalysatoren sind Aluminiumtrimethyl und Cobalt-(II)-acetylacetonat sowie Aluminiumtrisobutyl und Nickel-(II)-acetylacetonat, wobei das letztere bevorzugt ist.

In der Regel werden die Mischkatalysatoren in einem Verhältnis von Aluminiumtrialkyl zur Verbindung des Metalls der 8. Nebengruppe von 2:1 bis 20:1, vorzugsweise 2:1 bis 10:1 eingesetzt, wobei die Gesamtmenge des Katalysators 0,001 bis 1 Gew.-%, vorzugsweise 0,01 bis 1 Gew.-%, bezogen auf die Menge des eingesetzten Polymerisates beträgt.

Üblicherweise wird die Hydrierung zwischen 20 und 200°C, vorzugsweise zwischen 60 und 200°C durchgeführt; unterhalb von 20°C verlangsamt sich die Reaktion zu sehr und oberhalb von 200°C ist mit merklichen Nebenreaktionen wie Hydrierung der aromatischen Doppelbindungen zu rechnen.

Für den Wasserstoffdruck kommt ein Bereich von etwa 5 bis 100 bar in Betracht, wobei sich für praktische Zwecke der Bereich von 5 bis etwa 50 bar besonders empfiehlt.

Die Hydrierung erfolgt zweckmäßigerweise in inerten organischen Lösungsmitteln wie Hexan, Cyclohexan und Methylcyclohexan. Im allgemeinen empfiehlt es sich, die Hydrierung in dem Lösungsmittel durchzuführen, welches zuvor bei der Polymerisation verwendet wurde.

Metallierung

Verfahren zur Metallierung ungesättigter Polymerisate und Umsetzung der erhaltenen metallisierten Polymerisate mit reaktionsfähigen chemischen Verbindungen sind allgemein bekannt und z.B. in den Schriften US-A 3 781 260, US-A 3 976 628 und FR-A 2 437 417 beschrieben.

Aus der US-A 4 145 298 ist es bekannt, hydrierte Polymerisate zu metallisieren, so daß entlang der Polymerkette statistisch verteilte reaktive carbanionische Zentren entstehen.

Beim erfindungsgemäßen Verfahren erfolgt die Metallierung der hydrierten Polymerisate IIb zweckmäßigerweise unter Verwendung von alkalimetallorganischen Verbindungen, und zwar vorzugsweise von Lithium-Verbindungen. Ferner ist hierbei die Mitverwendung von Komplexbildnern besonders vorteilhaft.

Als lithiumorganische Verbindungen kommen Basen wie Methyl-, Ethyl-, Propyl-, n-Butyl-, sek.-Butyl, tert.-Butyl- und Benzyllithium in Betracht.

Als Komplexbildner können tertiäre Amine und Metallalkoxide eingesetzt werden.

Beispiele für tertiäre Amine sind

Tetramethylethylendiamin,
Tetraethylethylendiamin,
Tetradecylethylendiamin und
Tetraoctylhexylendiamin.

Ferner kommen Tetramethyl-1,2- und Tetramethyl-1,4-diaminocyclohexan in Betracht. Besonders bevorzugt ist N, N,N',N'-Tetramethylethylendiamin.

Als Metallalkoxide eignen sich Alkoholate von Alkalimetallen wie Methanolate, Ethanolate, Propanolate, sek.- und tert.-Butanolate, Butenolate, Hexenolate, Phenolate und Phenylphenolate. Beispiele für Alkalimetalle sind Natrium und Kalium. Beim erfindungsgemäßen Verfahren sind Kalium-sek.- und -tert.-butanolat besonders geeignet, wobei sich insbesondere die Verwendung von Kalium-tert.-butanolat empfiehlt.

Um den gewünschten Metallierungsgrad zu erzielen, werden 0,01 bis 12, vorzugsweise 0,05 bis 10 mmol der alkalimetallorganischen Verbindung pro 1 g Polymerisat IIb eingesetzt, so daß bei vollständigem Umsatz im Durchschnitt 1 bis 1200 carbanionische Zentren pro Gramm des Polymeren gebildet werden. Das molare Verhältnis von alkalimetallorganischer Verbindung zum Komplexbildner variiert von 0,05 bis 10, wobei unter Verwendung der tertiären Amine ein molares Verhältnis von 0,1 bis 2 und unter Verwendung der Alkalimetallalkoxide ein molares Verhältnis von 0,2 bis 2 besonders bevorzugt ist.

Im allgemeinen wird die Metallierung in einem inerten Lösungsmittel wie den gesättigten Kohlenwasserstoffen Hexan und Cyclohexan unter Stickstoffatmosphäre durchgeführt. Das Gewichtsverhältnis von Lösungsmittel zu Polymer kann zwischen 1 und 20 variieren.

Die Metallierung kann in einem Temperaturbereich von 0 bis 100°C durchgeführt werden; in der Regel wird ein Bereich von 25 bis 75°C bevorzugt. Bei höheren Temperaturen ist die thermische Stabilität der alkalimetallorganischen Verbindungen nicht mehr gewährleistet, bei niedrigeren Temperaturen verringert sich die Metallierungsgeschwindigkeit.

Im allgemeinen verläuft die Metallierung über einen Zeitraum von bis zu 24 Stunden, jedoch sind in den meisten Fällen kürzere Reaktionszeiten von einer Minute bis zwei Stunden bereits ausreichend.

Aminierung

Als nächste Stufe im erfindungsgemäßen Verfahren erfolgt die Umsetzung der metallierten Polymerisate IIc mit einem Diaziridin III zu den Polymerisaten IId.

Das Diaziridin III enthält bis zu 20 C-Atome und kann am C-Atom durch aliphatische Reste, die miteinander verbunden sein können, und am N-Atom durch aromatische oder aliphatische Reste, die miteinander verbunden sein können, substituiert sein.

Neben dem Diaziridin selbst kommen folgende, sich vom Stammkörper ableitende Derivate als Verbindung III in Betracht:

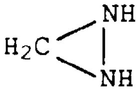

Diaziridin

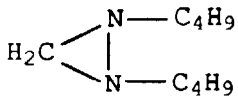
1,2-Dibutyldiaziridin

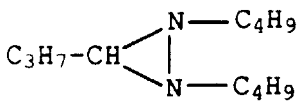
1,2-Dibutyl-3-propyldiaziridin

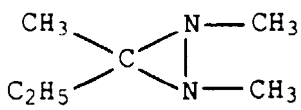
1,2-Dimethyl-3-methyl-3-ethyldiaziridin

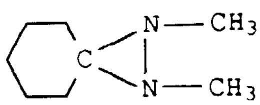
1,2-Dimethyl-3,3-pentamethylendiaziridin

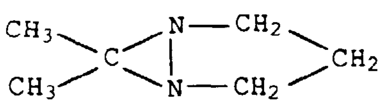
6,6-Dimethyl-1,5-diaza-bicyclo-[3,1,0]-hexan

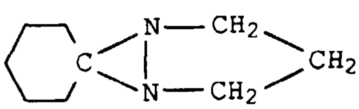
6,6-Pentamethylen-1,5-diaza-bicyclo-[3,1,0]-
-hexan

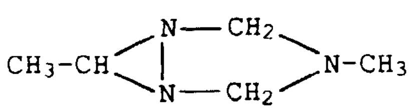
3,6-Dimethyl-1,3,5-triaza-bicyclo-[3,1,0]-
-hexan

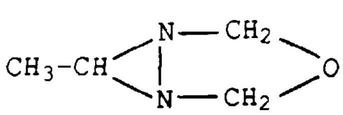
6-Methyl-3-oxa-1,5-diaza-bicyclo-[3,1,0]-hexan

Ganz besonders geeignet ist 1,5-Diaza-bicyclo[3,1,0]-hexan

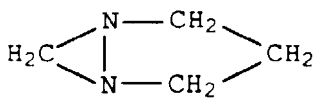

Weitere Individuen und die Herstellung derartiger Verbindungen sind bekannt und beispielsweise in "Chemische Berichte" 1964, Band 97, Seite 39 sowie 1966, Band 99, Seite 2104 beschrieben.

Im allgemeinen beträgt die Menge an eingesetztem Diaziridin III 0,01 bis 60, vorzugsweise 0,01 bis 20 mmol pro 1 g Polymerisat, was einem Verhältnis von einzuführender Aminogruppe zu carbanionischem Zentrum von 1 : 1 bis 5 : 1 entspricht, wobei ein Verhältnis von 1 : 1 bis 2 : 1 bevorzugt ist. Höhere Überschüsse an Diaziridin III dienen zur Reaktionsbeschleunigung und sind im allgemeinen nicht erforderlich.

Die Umsetzung der metallierten Polymerisate IIc mit einem Diaziridin III findet vorzugsweise bei Temperaturen zwischen -10 und 100°C statt, da bei Temperaturen unter (-10)°C die Reaktion zu langsam verläuft, und bei Temperaturen über 100°C unerwünschte Nebenreaktionen zunehmen können.

Die Umsetzung der Polymerisate IIc mit III erfolgt im allgemeinen in Gegenwart eines inerten unpolaren Lösungsmittels wie Hexan, Cyclohexan, Toluol und Benzol.

Die Menge des verwendeten Lösungsmittels beträgt ca. 1 bis 20 kg pro kg Polymerisat.

Man führt die Reaktion zweckmäßigerweise in inerter Atmosphäre, z.B. unter Stickstoff durch. Die Umsetzung erfolgt quantitativ und verläuft mit einer großen Reaktionsgeschwindigkeit, so daß sie meistens bereits nach 1 bis 20 Minuten beendet ist.

Hydrolyse oder Alkoholyse

Im letzten Schritt des erfindungsgemäßen Verfahrens erfolgt die Hydrolyse oder Alkoholyse von IId zu Ia. Besonders vorteilhaft ist die Alkoholyse unter Verwendung von Methanol und Ethanol; es können aber auch andere aliphatische Alkohole, vorzugsweise $C_3$-$C_4$-Alkanole verwendet werden.

Verwendet man Wasser oder Alkohol in einer zum Alkalimetall äquivalenten Menge, wird das Metall, z.B. Lithium, gegen Wasserstoff - unter Bildung von Lithiumhydroxid bzw. Lithiumalkoholat - ausgetauscht.

Setzt man Wasser oder Alkohol im Überschuß ein, welches die bevorzugte Ausführungsform ist, entstehen - je nach umgesetztem Diaziridin III - Polymerisate Ia mit primären bzw. sekundären Aminogruppen.

Insgesamt lassen sich Aminierung und Hydrolyse bzw. Alkoholyse wie folgt beschreiben:

a) Aminierung mit einem Diazabicycloalkan als III

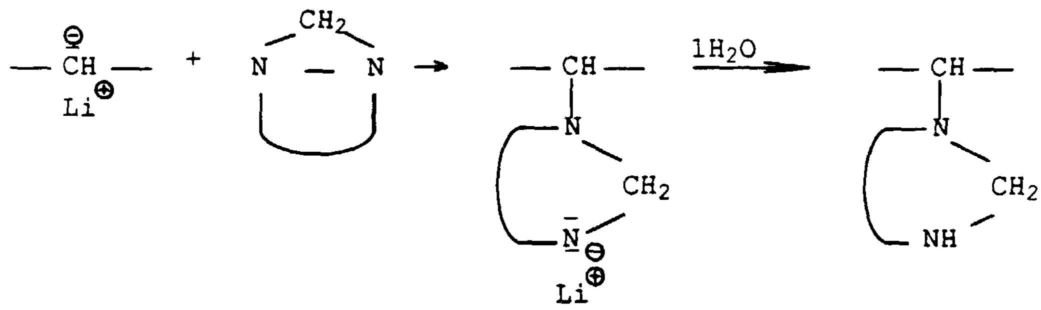


IIc III IId Ia

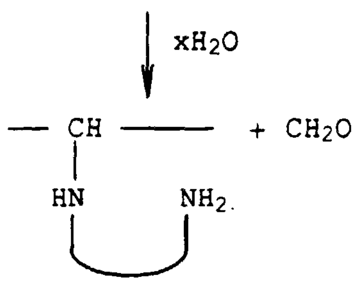


Ia

b) Aminierung mit einem 1,2-Dialkyldiaziridin als III

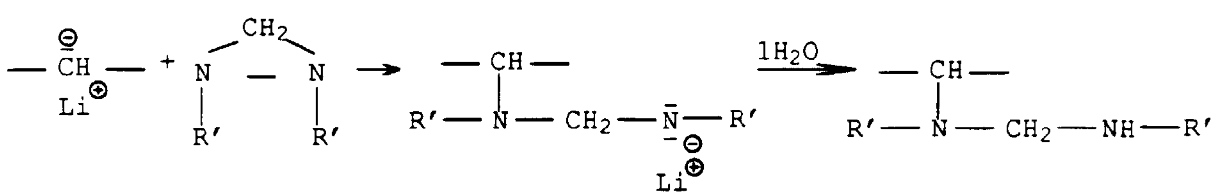


IIc III IId Ia

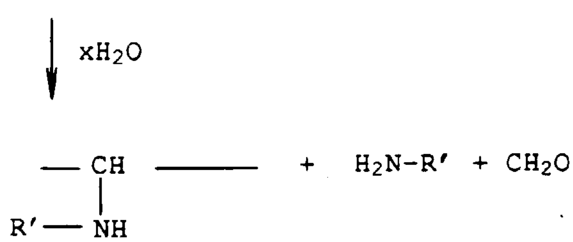


Ia

R′ = Alkyl

Epoxidierung

In einer weiteren Ausführungsform des erfindungsgemäßen Verfahrens werden funktionelle Gruppen tragende Polymerisate Ib durch Epoxidierung von partiell hydrierten Polymerisaten IIb' zu IIe und anschließender Umsetzung mit einer funktionelle Gruppen tragenden Verbindung IV hergestellt.

Für die Epoxidierungsreaktion eignen sich im allgemeinen die in Houben-Weyl, Methoden der organischen Chemie, Band 4/1a, S. 184ff (1981) und Band 6/3, S. 385ff (1981) beschriebenen Peroxyverbindungen. Es kommen folgende peroxidischen Verbindungen in Betracht:
Ethylperoxid, Isopropylperoxid, Isobutylperoxid, tert.-Butylperoxid und Benzylperoxid.

Bevorzugte Verbindungen sind Peroxide mit einem niedrigen Siedepunkt, da sie durch Destillation unter vermindertem Druck vom epoxidierten Polymerisat IIe abgetrennt werden können. Besonders bevorzugt ist tert.-Butylperoxid.

Die Menge des Epoxidierungsmittels richtet sich nach dem Gehalt der olefinischen Doppelbindungen im Polymerisat IIb', dem angestrebten Epoxidierungsgrad und dem Molekulargewicht des Polymerisates. Es ist vorteilhaft, den Epoxidierungsgrad so zu bemessen, daß IIe 0,01 bis 2, vorzugsweise 0,02 bis 1,5 mmol Oxiranringe pro Gramm Polymerisat enthält, so daß im nachfolgenden Reaktionsschritt 0,01 bis 2, vorzugsweise 0,02 bis 1,5 mol der Verbindung IV gebunden werden können. Im allgemeinen wird das Epoxidierungsagens in einem mehrfachen Überschuß zum gewünschten Epoxidierungsgrad und somit zu den noch vorhandenen olefinischen Doppelbindungen von IIb' eingesetzt. Überschüssiges Epoxidierungsmittel kann nach der Umsetzung destillativ entfernt werden.

Bei der Epoxidierung verwendet man zweckmäßigerweise Epoxidierungskatalysatoren mit, bei denen es sich in der Regel um Vanadium-, Molybdän- und Wolframverbindungen handelt; bevorzugt wird Molybdäntrioxid. Sie werden in der Regel in einer Menge von 0,005 bis 50 mmol pro Gramm IIb' eingesetzt.

Im allgemeinen dienen inerte organische Lösungsmittel als Reaktionsmedium. Vorzugsweise werden Kohlenwasserstoffe wie Toluol, Benzol, Cyclohexan und Methylcyclohexan verwendet. Das Gewichtsverhältnis von Lösungsmittel zu Polymeren kann zwischen 1 und 20 liegen.

Die Epoxidierung wird zweckmäßigerweise unter Schutzgasatmosphäre bei Temperaturen zwischen 0 und 120°C, vorzugsweise zwischen 25 und 75°C durchgeführt.

Umsetzung mit funktionelle Gruppen tragenden Verbindungen

Zur Einführung der funktionellen Gruppen werden die epoxidierten Polymerisate IIe mit einer Verbindung IV umgesetzt. Als Verbindung IV eignen sich beispielsweise folgende Verbindungen:

- Ammoniak
- primäre und sekundäre Amine mit bis zu 20 C-Atomen, z.B.

  Butylamin
  Tributylamin
  Dipentylamin

- Polyamine mit bis zu 300 C-Atomen und bis zu 100 N-Atomen, z.B.

  Ethyl-isopropylamin
  1,2-Ethandiamin
  1,3-Propandiamin
  1,4-Butandiamin
  Ethylaminoethylamin
  2-Dimethylaminoethylamin
  2-Diisopropylaminoethylamin
  N,N'-Dimethylethylendiamin
  N,N'-Di-tert.-butylethylendiamin
  N,N'-Dimethyl-1,3-propandiamin
  Diethylentriamin
  Dipropylentriamin
  N,N-Dimethyldipropylentriamin
  Triethylentetramin
  Polyethylenimin
  Tetraethylenpentamin

- Alkanolamine mit bis zu 120 C-Atomen, bis zu 10 N-Atomen und bis zu 12 Hydroxygruppen, z.B.

  Mono-, Di- und Triethanolamin
  Methyl- und Dimethylethanolamin
  Ethyl- und Diethylethanolamin
  Propyl- und Dipropylethanolamin

Methylisopropanolamin
Ethylisopropanolamin
6-Amino-1-hexanol
Mono-, Di-, Tri- und Tetraethanolhexamethylendiamin
Mono-, Di-, Tri- und Tetraisopropanolhexamethylendiamin
Mono-, Di-, Tri-, Tetra- und Pentaethanoldiethylentriamin,
Mono-, Di-, Tri-, Tetra- und pentaisopropanoldiethylentriamin,
Mono-, Di-, Tri-, Tetra-, Penta- und Hexaethanoltriethylentetramin, p
Mono-, Di-, Tri-, Tetra-, Penta- und Hexaisopropanoltriethylentetramin
3-Diethylamin-1,2-propandiol
3-(2-Hydroxyethylamin)-propanol
Dimethylaminodiglykol

- Polyalkohole mit bis zu 300 C-Atomen und bis zu 150 Hydroxygruppen, z.B.

1,2-Butandiol
1,2-Pentandiol
1,5-Pentandiol
1,6-Hexandiol
2-Butyl-2-ethyl-1,3-propandiol
Glycerin
1,2,4-Butantriol
2-Methyl-2-hydroxymethyl-1,3-propandiol
2-Ethyl-2-hydroxymethyl-1,3-propandiol
1,2,3,4-Butantetraol
Pentaerythrit
Polyvinylalkohol

- Polyether mit bis zu 300 C-Atomen und bis zu 100 Sauerstoffatomen, z.B. Polyethylenoxid und Polypropylenoxid.

Bevorzugte Verbindungen IV sind Mono-, Di-, Tri-, Tetra- und Pentaethanoldiethylentriamin, Mono-, Di-, Tri-, Tetra- und Pentaisopropanoldiethylentriamin, Mono-, Di-, Tri-, Tetra-, Penta- und Hexaethanoltriethylentetramin und Mono-, Di-, Tri-, Tetra-, Penta- und Hexaisopropanoltriethylentetramin sowie vor allem Diethylentriamin.

Um einen vollständigen Umsatz zu erzielen, wird die Verbindung IV in einem 2- bis 10-fachen Überschuß, bezogen auf die reaktiven Zentren des jeweiligen epoxidierten Copolymeren eingesetzt. Die überschüssigen Mengen der Verbindung IV lassen sich auf übliche Weise aus der Polymerlösung abtrennen.

Zum Zweck der Herstellung der erfindungsgemäßen Polymerisate Ib werden das epoxidierte Polymerisat IIe und Verbindung IV in einem inerten Lösungsmittel, vorteilhafterweise in aromatischen oder aliphatischen Kohlenwasserstoffen erhitzt.

Es empfiehlt sich, die Umsetzung bei Temperaturen zwischen 50 und 200°, vorzugsweise zwischen 80 und 160°C durchzuführen. Die Reaktionsdauer richtet sich nach der Reaktivität der Ausgangskomponenten und kann zwischen 0,1 und 40 Stunden variieren.

Die erfindungsgemäßen Polymerisate Ia und Ib werden vorzugsweise als dispergierende Viskositätsindex-Verbesserer für Motorenöle verwendet.

Die neuen Polymerisate Ia und Ib weisen gegenüber denen des Standes der Technik Vorteile auf, indem sie als Additive für Motorenöle die Viskosität dieser Öle erhöhen und gleichzeitig als Dispergiermittel für ölunlösliche Bestandteile wirken.

Die erfindungsgemäßen Motorenöle enthalten 0,1 bis 10, vorzugsweise 0,2 bis 5 Gew.-% der Polymerisate Ia und Ib als Viskositätsindex-Verbesserer.

Beispiele

In den nachfolgenden Beispielen wurden die Molekulargewichte der jeweiligen Polymerisate durch Gelpermeationschromatographie bestimmt. Als stationäre Phasen dienten vernetzte Polystyrolgele mit einer Korngröße von 5 µ und Porenweiten von 500, 1000 und 10.000 Å. Als mobile Phase wurde Tetrahydrofuran verwendet.

Als Eichsubstanzen zur Kalibrierung wurden verschiedene Polystyrole mit einer engen Molmassenverteilung eingesetzt. Zur Berechnung der mittleren Molekulargewichte (Zahlenmittel $\overline{M}_n$ und Gewichtsmittel $\overline{M}_w$) wurde ein GPC-Software-System der Firma Polymer-Standards (Mainz, BRD) verwendet.

Der Doppelbindungsgehalt wurde durch jodometrische Titration in Anlehnung an die Methode von Wijs (Ind. Eng. Chem. 1943, 15, 453) bestimmt.

Beispiel 1

Herstellung eines statistisch aufgebauten Butadien-Styrol-Copolymerisates IIa/1

Eine Mischung aus 7700 ml Cyclohexan, 40 ml Tetrahydrofuran, 480 g (8,9 mol) Butadien und 520 g (5 mol) Styrol wurde unter Stickstoff vorgelegt und bei 30°C mit 0,3 g (5 mmol) sek.-Butyllithium versetzt. Anschließend wurden 10 ml einer 1-normalen Lösung von sek.-Butyllithium in Hexan (10 mmol) zugegeben. Nach 10-minutigem Rühren wurde eine Reaktionstemperatur von ca. 123° erreicht. Die Polymerlösung wurde abgekühlt, und durch die Zugabe von 4 ml Wasser wurde die Polymerisation abgebrochen.

$\overline{M}_w$ = 170.000

$\overline{M}_n$ = 150.000

Beispiel 2

Herstellung eines Butadien-Styrol-Zweiblockcopolymerisates IIa/2 mit einem 1,2-Anteil von 57 % und einem Styrolgehalt von 25 Gew.-%

Eine Mischung aus 5000 ml Cyclohexan, 26 ml Tetrahydrofuran und 250 g (2,4 mol) Styrol wurde unter Stickstoff vorgelegt. Anschließend wurde bei 50°C unter Rühren soviel einer 0,2-molaren Lösung von sek.-Butyllithium in Hexan zugegeben, bis die Reaktionslösung schwach gelb gefärbt war. Danach wurden 10 ml einer 1-normalen Lösung von sek.-Butyllithium in Hexan (10 mmol) zugesetzt. Nach einstündigem Rühren bei 50°C wurde die Reaktionsmischung auf 30°C abgekühlt und mit 750 g (13,9 mol) Butadien versetzt. Die weitere Polymerisation erfolgte eine Stunde lang bei 50°C und noch eine weitere Stunde bei 60°. Durch Zugabe von 0,5 ml Wasser wurde schließlich die Polymerisation abgebrochen.

$\overline{M}_w$ = 160.000

$\overline{M}_n$ = 143.000

Beispiel 3

Herstellung eines Isopren-Styrol-Zweiblockcopolymerisates IIa/3

Eine Mischung aus 5000 ml Cyclohexan und 1,1 ml Diphenylethylen wurde unter Stickstoff vorgelegt. Anschließend wurde bei 30°C unter Rühren soviel einer 0,2-molaren Lösung von sek.-Butyllithium in Hexan zugesetzt, bis die Lösung schwach gelb gefärbt war. Nach der Zugabe von 10 ml einer 1-normalen Lösung von sek.-Butyllithium in Hexan (10 mmol) wurden 750 g (11 mol) Isopren zugesetzt. Nach einstündigem Rühren bei 60°C wurde noch eine weitere Stunde bei 70°C polymerisiert. Anschließend wurden 250 g (2,4 mol) Styrol hinzugegeben, und nach 30minutigem Rühren bei 60°C wurde die Polymerisation durch Zusatz von 0,5 ml Wasser abgebrochen.

$\overline{M}_w$ = 165.000

$\overline{M}_n$ = 154.000

Beispiel 4

Herstellung von IIb/1, IIb/2 und IIb/3 durch Hydrierung der Copolymerisate IIa/1, IIa/2 bzw. IIa/3

Im Laufe von 24 Stunden wurden jeweils die nach den Beispielen 1 bis 3 hergestellten Copolymerisate mit 1,48 g (5,8 mmol) Nickelacetylacetonat und 34 ml einer 20 gew.-%igen Lösung von Aluminiumtriisobutyl in Hexan (24 mmol) bei einem Wasserstoffdruck von 20 bar und einer Temperatur von 130°C hydriert. Durch Zugabe von 9 g 30 gew.-%igem Wasserstoffperoxid, 100 ml Wasser und 5 ml Essigsäure wurde der Hydrierkatalysator zerstört. Anschließend wurde jeweils das hydrierte Copolymerisat in Ethanol ausgefällt.

Beispiel 5

Herstellung von IIc/1, IIc/2 und IIc/3 durch Metallierung der hydrierten Copolymerisate IIb/1, IIb/2 bzw. IIb/3

Es wurden jeweils 500 g der nach den Beispielen 1 bis 3 hergestellten und nach Beispiel 4 hydrierten Copolymerisate unter Stickstoff in 5000 ml Cyclohexan gelöst und mit 0,5 g 1,1-Diphenylethylen versetzt. Anschließend wurde unter Rühren soviel einer 1-normale Lösung von n-Butyllithium in Hexan zugegeben, bis die Polymerlösung schwach gelb war. Danach wurden 50 ml einer 1-normalen Lösung von n-Butyllithium in Hexan (50 mmol) und 5,7 g (50 mmol) Kalium-tert.-butanolat zugegeben. Nach 2-stündigem Rühren bei 70°C wurde die Lösung auf 40°C abgekühlt.
Das gleiche Ergebnis wurde mit dem anstelle von Kalium-tert. -butanolat verwendeten Komplexbildner N,N,N',N' -Tetramethylethylendiamin, der in einer Menge von 17,5 g (150 mmol) zugegeben wurde, erzielt.

Beispiel 6

Herstellung von Ia/1, Ia/2 und Ia/3 durch Aminierung der metallierten Copolymerisate IIc/1, IIc/2 bzw. IIc/3 und Alkoholyse

Es wurden jeweils die nach Beispiel 5 hergestellten Polymerlösungen mit 14 ml einer 30 gew.-%igen Lösung von 1,5-Diazabicyclo-[3,1,0]-hexan (60 mmol) in Toluol versetzt. Nach einstündigem Rühren wurden die Produkte jeweils in Methanol ausgefällt.

Beispiel 7

Herstellung eines hydrierten und aminierten Butadien-Styrol-Zweiblockcopolymerisates Ia/2 in einer Reaktionsstufe

Die Herstellung des ungesättigten Ausgangscopolymeren erfolgte nach der Vorschrift von Beispiel 2. Für den Abbruch der Copolymerisation wurden 0,3 g Wasser als 5 gew.-%ige Lösung in Tetrahydrofuran zur Polymerlösung gegeben. Nach 5-minutigem Rühren setzte man 0,6 g (2,3 m mol) Nickelacetylacetonat und 13,6 ml einer 20 gew.-%igen Lösung von Aluminiumtriisobutyl in Hexan (9,5 mmol) zu. Danach wurde die Lösung 24 Stunden bei einem Wasserstoffdruck von 20 bar und einer Temperatur von 95°C hydriert. Nach dem Entweichen von Wasserstoff und destillativem Entfernen von Tetrahydrofuran wurden unter Stickstoff 100 ml einer 1-normalen Lösung von n-Butyllithium in Hexan (100 mmol) und 11,4 g (100 mmol) Kalium-tert.-butanolat zugegeben, und die Mischung wurde 2 Stunden bei 70°C gerührt. Anschließend wurde sie auf 40°C abgekühlt und mit 50 ml einer 3-molaren Lösung von 1,5-Diazabicyclo-[3,1,0]-hexan (150 mmol) in Cyclohexan versetzt. Nach einstündigem Rühren wurde das Produkt in Ethanol ausgefällt.

Beispiel 8

Herstellung von Ib/1 durch Epoxidierung von IIa/1 und Umsetzung mit IV

68 g des hydrierten Copolymerisates IIa/1 gemäß Beispiel 1 wurden in 600 ml Toluol gelöst und mit 2,4 g einer 48 gew.-%igen Lösung von tert.-Butylperoxid in Toluol sowie mit 100 mg Molybdäntrioxid versetzt. Die erhaltene Polymerlösung wurde dann in einem Stahlautoklaven mit 4,9 g (55 mmol) Diethylentriamin und 0,8 g Essigsäure 40 Stunden bei 140°C umgesetzt. Nach mehrmaligem Waschen mit Wasser wurde die Polymerlösung eingeengt, und anschließend wurde das Produkt aus Ethanol ausgefällt.

Beispiel 9

Herstellung von Ib/3 durch Epoxidierung von IIa/3 und Umsetzung mit IV

Entsprechend dem Beispiel 8 wurden 68 g des hydrierten Copolymerisates aus Beispiel 3 epoxidiert und mit Diethylentriamin umgesetzt.

Beispiel 10

Herstellung von 1,5-Diaza-bicyclo-[3,1,0]-hexan

Zu 74 g (1 mol) 1,3-Diaminopropan wurden bei 45°C unter Rühren 100 g einer 30 gew.-%igen Formaldehydlösung

(1 mol) und 548 ml (1 mol) einer wäßrigen Natriumhypochloritlösung gegeben. Nach einer Reaktionszeit von 1 Stunde ließ man das Rohprodukt abkühlen und extrahierte mehrmals mit Chloroform. Die destillative Aufarbeitung lieferte das Produkt in einer Ausbeute von 95 % und in einer gaschromatographischen Reinheit von 95 %. Nach einer weiteren Destillation über eine Füllkörperkolonne wurde das Produkt in einer Reinheit von 99 % erhalten.
Kp. 2 mbar = 42°C

Zur Qualitätsprüfung der Polymerisate wurden die folgenden Eigenschaften bestimmt:

- kinematische Viskosität nach DIN 51 562
- Viskositätsindex nach ISO 2909
- Scherstabilitätsindex (SSI) nach DIN 51 382
- Scherverlust nach DIN 51 382

Die kinematische Viskosität $\nu$ (Dimension $mm^2/s$ oder cSt) bezeichnet ein Viskositäts-Dichte-Verhältnis und ist definiert als der Quotient aus der absoluten Viskosität $\eta$ und der Dichte d einer Flüssigkeit

$$\nu = \frac{\eta}{d}$$

Um handliche Zahlenwerte zu erhalten, wird als Einheit das Centistoke gewählt (1 c St = $10^{-6}$ $m^2/s$). Das Verhältnis von Viskosität zu Dichte ergibt sich aus der in einem Kapillarviskosimeter durchgeführten Messung der Viskosität unter der Wirkung des Eigengewichtes der Flüssigkeit, wobei die Messung von der Erdbeschleunigung abhängig ist.

Die kinematische Viskosität wurde von einer 1,5 gew.-%igen Lösung des Polymerisates in einem Grundöl SN 200 bei 40 und 100°C in einem Kapillarviskosimeter bestimmt.

Der Viskositätsindex (VI) ist eine Kenngröße, aus der das Viskositäts-Temperatur (VT)-verhalten von Flüssigkeiten wie Schmierölen abgeleitet wird. Anhand der kinematischen Viskositäten $\nu$ der 1,5 gew.-%igen Lösungen des Polymerisates in einem Grundöl SN 200 wurde der Viskositätsindex (VI) nach ISO 2909 bestimmt.

Die Einwirkung von Scherkräften führt zum Abbau der zu Ölen als Viskositätsindex-Verbesserer zugesetzten Polymermoleküle und somit zum Viskositätsabfall des Öls. Die Viskositätsänderung durch Scherung wird als relativer Viskositätsabfall oder Scherverlust (Dimension %) bezeichnet und aus dem absoluten kinematischen Viskositätsverlust ($\nu_0$-$\nu_1$) und der kinematischen Viskosität des ungescherten Öls $\nu_0$ nach der Beziehung bestimmt:

$$\Delta\nu = \frac{\nu_0-\nu_1}{\nu_0} \,.\, 100$$

$\nu_0$- kinematische Viskosität des ungescherten Öls bei 100°C
$\nu_1$- kinematische Viskosität des gescherten Öls bei 100°C

Der Scherverlust wurde nach DIN 51 382 durch Messungen der kinematischen Viskosität einer 1,5 gew.-%igen Lösung des Polymerisats im Grundöl SN 200 bestimmt. Das Prüföl wurde 30 mal durch eine Dieseleinspritzdüse geschickt, und die Änderung der Viskosität im eingespritzten Öl gegenüber der Viskosität des nicht eingespritzten Öls wurde als permanenter Viskositätsverlust bestimmt.

Der Scher-Stabilitäts-Index (SSI) wurde nach DIN 51 382 bestimmt. Er berücksichtigt die Viskosität des Grundöls und wird nach der Beziehung berechnet:

$$SSI = \frac{\nu_0-\nu_1}{\nu_0-\nu_G} \,.\, 100$$

$\nu_0$- kinematische Viskosität des ungescherten Öls bei 100°C
$\nu_1$- kinematische Viskosität des gescherten Öls bei 100°C
$\nu_G$- kinematische Viskosität des Grundöls bei 100°C

Zur Beurteilung der Dispergierwirkung der Polymere wurde der Tüpfeltest herangezogen (A. Schilling, Les Huiles pour Moteurs et le Graissage des Moteurs, Band 1, Seite 84 und folgende, 1962). Eine 15 gew.-%ige Lösung des

jeweiligen Polymerisates in einem unlegierten Grundöl wurde mit 5 Gew.-% eines Öls, welches in einem Motortest mit Ruß und anderen Verbrennungsrückständen beladen worden war, versetzt. Um den Einfluß von Wasser und Temperatur auf die dispergierende Wirkung zu prüfen, wurden mit jeder Dispersion jeweils vier Tüpfeltests durchgeführt:

a) ohne Zugabe von Wasser

b) mit Zugabe von 1 Gew.-% Wasser

c) 10-minütiges Erhitzen auf 250°C ohne Zugabe von Wasser

d) 10-minütiges Erhitzen auf 250°C mit Zugabe von 1 Gew.-% Wasser

Zum Zwecke der Prüfung wurden die öligen Dispersionen auf Filterpapier aufgebracht und wie ein Chromatogramm 24 Stunden entwickelt. Das prozentuale Verhältnis der Laufradien von verteiltem Ruß zu reinem Laufmittel (Grund öl) gibt Hinweise auf die dispergierende Wirkung des Polymerisates.

Die Ergebnisse der einzelnen Qualitätsprüfungen sind der nachfolgenden Tabelle zu entnehmen. Sie zeigen, daß die erfindungsgemäßen Polymerisate ausgezeichnete Viskositätsindexverbesserer für Motorenöle sind und hierbei gleichzeitig hervorragende Dispergierwirkung aufweisen.

Tabelle

Anwendungstechnische Eigenschaften der erfindungsgemäßen Polymeren

| Polymerisat hergestellt nach Beispiel | $\bar{M}_n$ ($10^3$ g/mol) | Viskosität v bei 40°C (cSt) | Viskosität v bei 100°C (cSt) | Viskositätsindex VI | Scherverlust % | SSI | Dispergierende Wirkung Verhältnis der Laufradien von Ruß zu Öl in % a) | b) | c) | d) |
|---|---|---|---|---|---|---|---|---|---|---|
| Ia/1 (Beispiel 6) | 155 | 81 | 11,6 | 134 | 48 | 11 | 67,9 | 67,9 | 53,9 | 66,7 |
| Ia/2 (Beispiel 6) | 145 | 170 | 22,9 | 163 | 34 | 50 | 66,7 | 64,0 | 47,1 | 39,4 |
| Ia/3 (Beispiel 6) | 155 | 159 | 19,9 | 145 | 31 | 40 | 66,0 | 65,0 | 58,1 | 59,9 |
| Ia/2 (Beispiel 7) | 150 | 163 | 20,2 | 144 | 36 | 55 | 71,8 | 69,0 | 47,3 | 45,2 |
| Ib/1 (Beispiel 8) | 145 | 103 | 14,5 | 145 | 12,4 | 21 | 70,4 | 69,4 | 64,3 | 62,1 |
| Ib/3 (Beispiel 9) | 150 | 148 | 20,2 | 158 | 25,5 | 39 | 70,3 | 74,6 | 49,3 | 47,3 |

a) Öldispersion ohne Wasser
b) Öldispersion mit 1 Gew.-% Wasser
c) Öldispersion ohne Wasser und Erhitzen auf 250°C
d) Öldispersion mit 1 Gew.-% Wasser und Erhitzen auf 250°C

**Patentansprüche**

1. Funktionelle Gruppen tragende Polymerisate Ia und Ib auf der Basis von konjugierten Dienen, erhältlich durch

   A)

   1. partielle oder vollständige Hydrierung der olefinischen Doppelbindungen eines Polymerisates IIa aus

      a) 20 bis 100 Gew.-% eines konjugierten Diens,

      b) 0 bis 80 Gew.-% eines Vinylaromaten und

      c) 0 bis 20 Gew.-% weiterer Comonomerer

   zu den hydrierten Polymerisaten IIb,

   2. Metallierung der Polymerisate IIb mit einer alkalimetallorganischen Verbindung bis zu einem Metallierungsgrad von 0,01 bis 12 mmol des Alkalimetalls pro Gramm IIb zu den metallierten Polymerisaten IIc,

   3. Umsetzung der Polymerisate IIc mit einem Diaziridin III, das bis zu 20 C-Atome enthält, zu den Polymerisaten IId und

   4. Hydrolyse oder Alkoholyse von IId zu Ia

   oder durch

   B)

   1. partielle Hydrierung eines Polymerisates IIa zu partiell hydrierten Polymerisaten IIb' mit der Maßgabe, daß IIb' noch 0,2 bis 2 mmol Doppelbindungen pro Gramm Polymerisat enthält,

   2. Epoxidierung der Doppelbindungen von IIb' zu epoxidierten Polymerisaten IIe mit der Maßgabe, daß IIe 0,01 bis 2 mmol Oxiranringe pro Gramm Polymerisat enthält und

   3. Umsetzung der Polymerisate IIe mit Ammoniak, einem primären Amin mit bis zu 12 C-Atomen, einem sekundären Amin mit bis zu 20 C-Atomen, einem Polyamin mit bis zu 300 C-Atomen und bis zu 100 N-Atomen, einem Alkanolamin mit bis zu 120 C-Atomen, bis zu 10 N-Atomen und bis zu 12 Hydroxygruppen, einem Polyalkohol mit bis zu 300 C-Atomen und bis zu 150 Hydroxygruppen oder einem Polyether mit bis zu 300 C-Atomen und bis zu 100 Sauerstoffatomen (Verbindung IV) zu Ib.

2. Polymerisate nach Anspruch 1, erhältlich aus Buta-1,3-dien, 2-Methylbuta-1,3-dien und/oder 2,3-Dimethylbuta-1,3-dien als Monomeren (a)

3. Polymerisate nach Anspruch 1 oder 2, erhältlich aus Styrol, α-Methylstyrol und/oder p-Methylstyrol als Monomeren (b).

4. Polymerisate nach den Ansprüchen 1 bis 3, erhältlich durch Umsetzung der Polymerisate IIc mit 1,5-Diazabicyclo [3,1,0]-hexan als Diaziridin III.

5. Polymerisate nach den Ansprüchen 1 bis 3, erhältlich durch Umsetzung der Polymerisate IIe mit Mono-, Di- oder Triethanolamin, Mono-, Di-, Tri- oder Tetraethanolhexamethylendiamin, Mono-, Di-, Tri- oder Tetraisopropanolhexamethylendiamin, Diethylentriamin, Triethylentetramin oder Tetraethylenpentamin als Verbindung IV.

6. Verfahren zur Herstellung von funktionellen Gruppen tragenden Polymerisaten Ia und Ib auf der Basis von konjugierten Dienen, dadurch gekennzeichnet, daß man ein Polymerisat IIa aus

   a) 20 bis 100 Gew.-% eines konjugierten Diens
   b) 0 bis 80 Gew.-% eines Vinylaromaten und

c) 0 bis 20 Gew.-% weiterer Comonomerer

durch

A)

1. partielle oder vollständige Hydrierung der olefinischen Doppelbindungen von IIa zu den hydrierten Polymerisaten IIb,

2. Metallierung der Polymerisate IIb mit einer alkalimetallorganischen Verbindung bis zu einem Metallierungsgrad von 0,01 bis 12 mmol des Alkalimetalls pro Gramm IIb zu den metallierten Polymerisaten IIc,

3. Umsetzung der Polymerisate IIc mit einem Diaziridin III, das bis zu 20 C-Atome enthält, zu den Polymerisaten IId und

4. Hydrolyse oder Alkoholyse von IId zu Ia

oder durch

B)

1. partielle Hydrierung zu partiell hydrierten Polymerisaten IIb' mit der Maßgabe, daß IIb' noch 0,2 bis 2 mmol Doppelbindungen pro Gramm Polymerisat enthält,

2. Epoxidierung der Doppelbindungen von IIb' zu epoxidierten Polymerisaten IIe mit der Maßgabe, daß IIe 0,01 bis 2 mmol Oxiranringe pro Gramm Polymerisat enthält und

3. Umsetzung der Polymerisate IIe mit Ammoniak, einem primären Amin mit bis zu 12 C-Atomen, einem sekundären Amin mit bis zu 20 C-Atomen, einem Polyamin mit bis zu 300 C-Atomen und bis zu 100 N-Atomen, einen Alkanolamin mit bis zu 120 C-Atomen, bis zu 10 N-Atomen und bis zu 12 Hydroxygruppen, einem Polyalkohol mit bis zu 300 C-Atomen und bis zu 150 Hydroxygruppen oder einem Polyether mit bis zu 300 C-Atomen und bis zu 100 Sauerstoffatomen (Verbindung IV) zu Ib

umsetzt.

**7.** Verwendung der Polymerisate gemäß Anspruch 1 bis 6 als Viskositätsindex-Verbesserer für Motorenöle.

**8.** Motorenöle, enthaltend Polymerisate gemäß Anspruch 1 bis 6.

**9.** Motorenöle nach Anspruch 8, enthaltend 0,1 bis 10 Gew.-% der Polymerisate.

## Claims

**1.** A polymer Ia or Ib based on conjugated dienes, carrying functional groups and obtainable by

A)

1. hydrogenation of all or some of the olefinic double bonds of a polymer IIa comprising

a) from 20 to 100% by weight of a conjugated diene,
b) from 0 to 80% by weight of an aromatic vinyl compound, and
c) from 0 to 20% by weight of further comonomers,

to give the hydrogenated polymer IIb,
2. metallation of the polymer IIb using an organoalkali metal compound to a degree of metallation of from 0.01 to 12 mmol of alkali metal per gram of IIb, to give the metallated polymer IIc,
3. reaction of the polymer IIc with a diaziridine III containing up to 20 carbon atoms, to give the polymer

IId, and
4. hydrolysis or alcoholysis of IId to give Ia,

or by
B)

1. partial hydrogenation of a polymer IIa to give a partially hydrogenated polymer IIb', with the proviso that IIb' still contains from 0.2 to 2 mmol of double bonds per gram of polymer,
2. epoxidation of the double bonds of IIb' to give an epoxidized polymer IIe, with the proviso that IIe contains from 0.01 to 2 mmol of oxirane rings per gram of polymer, and
3. reaction of the polymer IIe with ammonia, a primary amine having up to 12 carbon atoms, a secondary amine having up to 20 carbon atoms, a polyamine having up to 300 carbon atoms and up to 100 nitrogen atoms, an alkanolamine having up to 120 carbon atoms, up to 10 nitrogen atoms and up to 12 hydroxyl groups, a polyalcohol having up to 300 carbon atoms and up to 150 hydroxyl groups, or a polyether having up to 300 carbon atoms and up to 100 oxygen atoms (compound IV), to give Ib.

**2.** A polymer as claimed in claim 1, obtainable from 1,3-butadiene, 2-methyl-1,3-butadiene and/or 2,3-dimethyl-1,3-butadiene as the monomer (a).

**3.** A polymer as claimed in claim 1 or 2, obtainable from styrene, α-methylstyrene and/or p-methylstyrene as the monomer (b) .

**4.** A polymer as claimed in any of claims 1 to 3, obtainable by reacting the polymer IIc with 1,5-diazabicyclo[3.1.0] hexane as the diaziridine III.

**5.** A polymer as claimed in any of claims 1 to 3, obtainable by reacting the polymer IIe with mono-, di- or triethanolamine, mono-, di-, tri- or tetraethanolhexamethylenediamine, mono-, di-, tri- or tetraisopropanolhexamethylenediamine, diethylenetriamine, triethylenetetramine or tetraethylenepentamine as the compound IV.

**6.** A process for the preparation of a polymer Ia or Ib based on conjugated dienes and carrying functional groups, which comprises reacting a polymer IIa comprising

a) from 20 to 100% by weight of a conjugated diene,
b) from 0 to 80% by weight of an aromatic vinyl compound, and
c) from 0 to 20% by weight of further comonomers,

by

A)

1. hydrogenation of all or some of the olefinic double bonds of IIa to give the hydrogenated polymer IIb,
2. metallation of the polymer IIb using an organoalkali metal compound to a degree of metallation of from 0.01 to 12 mmol of alkali metal per gram of IIb, to give the metallated polymer IIc,
3. reaction of the polymer IIc with a diaziridine III containing up to 20 carbon atoms, to give the polymer IId, and
4. hydrolysis or alcoholysis of IId to give Ia,

or by
B)

1. partial hydrogenation to give a partially hydrogenated polymer IIb', with the proviso that IIb' still contains from 0.2 to 2 mmol of double bonds per gram of polymer,
2. epoxidation of the double bonds of IIb' to give an epoxidized polymer IIe, with the proviso that IIe contains from 0.01 to 2 mmol of oxirane rings per gram of polymer, and 3. reaction of the polymer IIe with ammonia, a primary amine having up to 12 carbon atoms, a secondary amine having up to 20 carbon atoms, a polyamine having up to 300 carbon atoms and up to 100 nitrogen atoms, an alkanolamine having up to 120 carbon atoms, up to 10 nitrogen atoms and up to 12 hydroxyl groups, a polyalcohol having up to 300 carbon atoms and up to 150 hydroxyl groups, or a polyether having up to 300 carbon atoms and up to

100 oxygen atoms (compound IV), to give Ib.

**7.** The use of a polymer as claimed in any of claims 1 to 6 as a viscosity index improver for engine oils.

**8.** An engine oil containing a polymer as claimed in any of claims 1 to 6.

**9.** An engine oil as claimed in claim 8, containing from 0.1 to 10% by weight of the polymer.

## Revendications

**1.** Polymères Ia et Ib portant des groupements fonctionnels, à base de diènes conjugués, obtenus par

A)

1. hydrogénation partielle ou complète des doubles liaisons oléfiniques d'un polymère IIa de

a) 20 à 100% en poids d'un diène conjugué,
b) 0 à 80% en poids d'un composé vinylaromatique et
c) 0 à 20% en poids d'autres comonomères,

pour donner les polymères hydrogénés IIb,
2. métallation des polymères IIb avec un composé organique de métal alcalin jusqu'à un degré de métallation de 0,01 à 12 mmoles du métal alcalin par gramme de IIb, pour donner les polymères métallés IIc,
3. réaction des polymères IIc avec une diaziridine III qui contient jusqu'à 20 atomes de carbone, pour donner les polymères IId, et
4. hydrolyse ou alcoolyse de IId pour donner Ia,

ou par
B)

1. hydrogénation partielle d'un polymère IIa, pour donner des polymères partiellement hydrogénés IIb', étant spécifié que IIb' contient encore 0,2 à 2 mmoles de doubles liaisons par gramme de polymère,
2. époxydation des doubles liaisons de IIb' pour donner des polymères époxydés IIe, étant spécifié que IIe contient 0,01 à 2 mmoles de cycles oxiranne par gramme de polymère, et
3. réaction des polymères IIe avec de l'ammoniac, une amine primaire contenant jusqu'à 12 atomes de carbone, une amine secondaire contenant jusqu'à 20 atomes de carbone, une polyamine contenant jusqu'à 300 atomes de carbone et jusqu'à 100 atomes d'azote, une alcanolamine contenant jusqu'à 120 atomes de carbone, jusqu'à 10 atomes d'azote et jusqu'à 12 groupements hydroxy, un polyalcool contenant jusqu'à 300 atomes de carbone et jusqu'à 150 groupements hydroxy, ou un polyéther contenant jusqu'à 300 atomes de carbone et jusqu'à 100 atomes d'oxygène (composé IV), pour donner Ib.

**2.** Polymères selon la revendication 1, obtenus à partir de buta-1,3-diène, de 2-méthylbuta-1,3-diène et/ou de 2,3-diméthylbuta-1,3-diène en tant que monomère (a).

**3.** Polymères selon la revendication 1 ou 2, obtenus à partir de styrène, d'$\alpha$-méthylstyrène et/ou de p-méthylstyrène en tant que monomère (b).

**4.** Polymères selon l'une quelconque des revendications 1 à 3, obtenus par réaction des polymères IIc avec du 1,5-diazabicyclo[3.1.0]hexane en tant que diaziridine III.

**5.** Polymères selon l'une quelconque des revendications 1 à 3, obtenus par réaction des polymères IIe avec de la mono-, di- ou triéthanolamine, de la mono-, di-, tri- ou tétraéthanolhexaméthylénediamine, de la mono-, di-, tri- ou tétraisopropanolhexaméthylénediamine, de la diéthylénetriamine, de la triéthylènetétramine ou de la tétraéthylénepentamine en tant que composé IV.

**6.** Procédé de préparation de polymères Ia et Ib portant des groupements fonctionnels, à base de diènes conjugués, caractérisé en ce que l'on transforme un polymère IIa de

a) 20 à 100% en poids d'un diène conjugué,
b) 0 à 80% en poids d'un composé vinylaromatique et
c) 0 à 20% en poids d'autres comonomères

par

A)

1. hydrogénation partielle ou complète des doubles liaisons oléfiniques de IIa, pour donner les polymères hydrogénés IIb,
2. métallation des polymères IIb avec un composé organique de métal alcalin jusqu'à un degré de métallation de 0,01 à 12 mmoles du métal alcalin par gramme de IIb, pour donner les polymères métallés IIc,
3. réaction des polymères IIc avec une diaziridine III qui contient jusqu'à 20 atomes de carbone, pour donner les polymères IId, et
4. Hydrolyse ou alcoolyse de IId pour donner Ia,

ou par
B)

1. hydrogénation partielle, pour donner des polymères partiellement hydrogénés étant spécifié que IIb' contient encore 0,2 à 2 mmoles de doubles liaisons par gramme de polymère,
2. époxydation des doubles liaisons de IIb' pour donner des polymères époxydés IIe, étant spécifié que IIe contient 0,01 à 2 mmoles de cycles oxiranne par gramme de polymère, et
3. réaction des polymères IIe avec de l'ammoniac, une amine primaire contenant jusqu'à 12 atomes de carbone, une amine secondaire contenant jusqu'à 20 atomes de carbone, une polyamine contenant jusqu'à 300 atomes de carbone et jusqu'à 100 atomes d'azote, une alcanolamine contenant jusqu'à 120 atomes de carbone, jusqu'à 10 atomes d'azote et jusqu'à 12 groupements hydroxy, un polyalcool contenant jusqu'à 300 atomes de carbone et jusqu'à 150 groupements hydroxy, ou un polyéther contenant jusqu'à 300 atomes de carbone et jusqu'à 100 atomes d'oxygène (composé IV), pour donner Ib.

**7.** Utilisation des polymères selon l'une quelconque des revendications 1 à à comme agents d'amélioration de l'indice de viscosité pour des huiles pour moteurs.

**8.** Huiles pour moteurs, contenant des polymères selon l'une quelconque des revendications 1 à 6.

**9.** Huiles pour moteurs selon la revendication 8, contenant de 0,1 à 10% en poids des polymères.